# EUROPÄISCHE PATENTSCHRIFT

(11) **EP 3 555 454 B1**
(45) Veröffentlichungstag und Bekanntmachung des Hinweises auf die Patenterteilung: **16.06.2021**
(21) Anmeldenummer: 17825745.7
(22) Anmeldetag: 13.12.2017
(51) Int. Cl.: F02M 63/00, F02M 43/04, F02M 47/02, F02M 21/02, F02D 19/06, F02D 19/10

(54) **KRAFTSTOFFINJEKTORANORDNUNG**
FUEL INJECTOR ARRANGEMENT
ENSEMBLE INJECTEUR DE CARBURANT

(30) Priorität: 16.12.2016 DE 102016015037
(43) Veröffentlichungstag der Anmeldung: 23.10.2019
(73) Patentinhaber: L'Orange GmbH, 70435 Stuttgart (DE)
(72) Erfinder: BERGER, Ingmar, 70374 Stuttgart (DE); BÄROW, Enrico, 70376 Stuttgart (DE); NITSCHE, Michael, 71701 Schwieberdingen (DE)
(74) Vertreter: Fish & Richardson P.C.
(86) Internationale Anmeldenummer: PCT/EP2017/001424
(87) Internationale Veröffentlichungsnummer: WO 2018/108317

(56) Entgegenhaltungen:
- EP-A1- 0 546 985
- WO-A1-98/51925
- DE-T5-112007 001 288
- US-A- 5 632 253

## Beschreibung

Die vorliegende Erfindung betrifft eine Kraftstoffinjektoranordnung gemäß Anspruch 1.

Im Stand der Technik wie WO 98/51925 A1 sind Kraftstoffinjektoranordnungen bekannt, welche einen Kraftstoffinjektor für das Ausbringen von Brenngas aufweisen und welche für die Steuerung jeweiliger Brenngas-Düsenventilglieder des Kraftstoffinjektors, d.h. eines oder mehrerer Brenngas-Düsenventilglieder, ein Steuerfluid wie z.B. Steueröl nutzen. Um zu vermeiden, dass bei Brenngasbetrieb Brenngas unbeabsichtigt in den Steuerfluid-Steuerkreis gelangt, insbesondere Kriechpfaden entlang jeweiliger Brenngas-Düsenventilgliedführungen geschuldet, kann zur Medientrennung bzw. Abdichtung an jeweiligen Brenngas-Düsenventilgliedführungen die Nutzung von Sperrfluid (Sperrröl) vorgesehen werden, d.h. im Rahmen von Sperrfluiddichtungen um jeweilige Brenngas-Düsenventilglieder herum (daneben können im Kraftstoffinjektor weitere Sperrfluiddichtungen andernorts vorgesehen sein).

Bei solchen Brenngasinjektoren ist es im Rahmen der Betriebs- und Funktionssicherheit wichtig, Gasleckagen zuverlässig zu vermeiden, wozu die Medien Steuerfluid, Brenngas und Sperrfluid in einer vorgegebenen Reihenfolge zugeschaltet werden müssen. Eine solche Schaltung in möglichst kurzen Abständen muss auf aufwändige Weise von der Injektorperipherie geregelt werden. Problematisch sind auch Not-Aus-Situationen, bei welchen in der Regel zuerst der Gasdruck abgeschaltet wird, während der Steuerfluiddruck und der Sperrröldruck unvorteilhaft weiter vorherrschen. Dies kann in unbeabsichtigter Weise zu einer hohen Federbelastung von im Injektor verbauten Federn führen, insoweit als der Brenngas-Druck dann nicht mehr zur Aufrechterhaltung des Druckgleichgewichts zur Verfügung steht.

Ausgehend hiervon liegt der vorliegenden Erfindung die Aufgabe zugrunde, eine Kraftstoffinjektoranordnung der vorgenannten Art bereitzustellen, welche die Nachteile des Standes der Technik überwindet.

Diese Aufgabe wird durch eine Kraftstoffinjektoranordnung mit den Merkmalen des Anspruchs 1 gelöst.

Vorteilhafte Weiterbildungen und Ausführungsformen sind in den weiteren Ansprüchen angegeben.

Vorgeschlagen wird erfindungsgemäß eine Kraftstoffinjektoranordnung, vorzugsweise mit einem Kraftstoffinjektor, insbesondere für den Betrieb mit Brenngas, zum Beispiel in Form von Erdgas, Sondergas, Deponiegas, Biogas, Wasserstoff o.ä. Der Kraftstoffinjektor kann ein Single-Fuel-Injektor sein, welcher nur für das Ausdüsen von Brenngas bereitgestellt ist, alternativ und bevorzugt ein Dual-Fuel-Kraftstoffinjektor, welcher neben Brenngas auch Flüssigkraftstoff ausdüsen kann, zum Beispiel Dieselkraftstoff, Schweröl oder Bioöl. Ein solcher Kraftstoffinjektor kann zum Beispiel für einen Zündstrahlbetrieb vorgesehen sein, bei welchem mittels einer geringen Flüssigkraftstoff-Einspritzmenge (Zündstrahl) das Brenngas entzündet wird. Die Kraftstoffinjektoranordnung, welche bevorzugt einen wie vorstehend erörterten Kraftstoffinjektor aufweist, ist bevorzugt Bestandteil einer Common-Rail-Kraftstoffeinspritzeinrichtung.

Allgemein kann die Kraftstoffinjektoranordnung z.B. mit einem Großmotor verwendet werden, zum Beispiel in einem Kraftfahrzeug wie etwa einem Schiff, einer Lok, einem Sonderfahrzeug oder einem Nutzfahrzeug, oder zum Beispiel für eine stationäre Einrichtung vorgesehen sein, z.B. für ein Blockheizkraftwerk, ein (Not-)Stromaggregat, insbesondere auch für Industrieanwendungen.

Die vorgeschlagene Kraftstoffinjektoranordnung, welche insbesondere zur Versorgung von (unterschiedlichen) Fluiden an einen bevorzugt wie oben erörterten Kraftstoffinjektor eingerichtet ist, weist eine Anzahl von Fluidversorgungswegen auf (über welche je ein Fluid insbesondere an eine in einem Kraftstoffinjektor befindliche Bedarfsposition geführt werden kann), nämlich einen ersten Fluidversorgungsweg (insbesondere einen Steuerfluidweg), einen zweiten Fluidversorgungsweg (insbesondere einen Brenngasweg) und einen dritten Fluidversorgungsweg (insbesondere einen Sperrfluidweg). Diese Fluidversorgungswege sind dazu vorgesehen bzw. eingerichtet, - je an einer Abströmseite - bevorzugt in einem bzw. innerhalb eines Kraftstoffinjektors, insbesondere der Kraftstoffinjektoranordnung, auszumünden (an jeweiligen Bedarfspositionen). Insoweit kann sich ein jeweiliger Fluidversorgungsweg - je zumindest abschnittsweise - innerhalb und/oder außerhalb eines solchen Kraftstoffinjektors erstrecken. Ein jeweiliger Fluidversorgungsweg ist insbesondere als Leitung gebildet, z.B. auch mittels eines Bohrkanals.

Nachstehend wird auf den ersten, zweiten und dritten Fluidversorgungsweg insbesondere bei Verwendung mit einem Kraftstoffinjektor eingegangen.

Der erste Fluidversorgungsweg ist dazu vorgesehen, Steuerfluid, insbesondere hochdruckbeaufschlagtes Steuerfluid wie zum Beispiel Steueröl, an einen Steuerkreis, insbesondere an einen Eingang desselben (entsprechend der Bedarfsposition), für die (Hub-)Steuerung wenigstens eines Brenngas-Düsenventilglieds des Kraftstoffinjektors zuzuführen bzw. zu versorgen. Ein solcher Steuerkreis kann, zum Beispiel mittels einer Kolbensteueranordnung (welche vorzugsweise gleichsam eines doppelt wirkenden Hydraulikzylinders arbeitet) sowie einem zugehörigen Steuerventil gebildet, die Hubsteuerung jeweiliger Brenngas-Düsenventilglieder ermöglichen. Hierzu kann ein jeweiliges Brenngas-Düsenventilglied, insbesondere an einem düsenfernen Endabschnitt, mit einem Kolben verbunden sein, welcher im Rahmen der Kolbensteueranordnung hin- und her steuerbar ist. An einem entgegen gesetzten, düsennahen Endabschnitt eines derart hubsteuerbaren Brenngas-Düsenventilglieds kann ferner eine Brenngas-Düsenanordnung des Kraftstoffinjektors gebildet sein. Anströmseitig ist der Steuerfluidweg zur Verbindung mit einer Steuerfluidquelle vorgesehen.

Der zweite Fluidversorgungsweg der Kraftstoffinjektoranordnung, insbesondere zur Brenngasversorgung, ist im Kraftstoffinjektor zum Beispiel an einen abströmseitigen Brenngas-Düsenraum (entsprechend der Bedarfsposition) geführt, z.B. an einen Ringraum für eine Mehrzahl von Brenngas-Düsenventilgliedern, aus welchem Düsenraum mit Abheben eines Brenngas-Düsenventilglieds aus einem Sitz oder allgemein mit dem Öffnen eines Brenngas-Düsenventils des Kraftstoffinjektors Brenngas über eine - wie oben erwähnte - nachgeordnete Brenngas-Düsenanordnung ausdüsbar ist. Die Versorgung von Brenngas an eine Anströmseite des zweiten Fluidversorgungswegs kann zum Beispiel mit einem Druckniveau im Bereich von 350 bar oder darüber vorgesehen werden, z.B. seitens einer Brenngasquelle

Der dritte Fluidversorgungsweg der Kraftstoffinjektoranordnung ist nunmehr zur Versorgung eines Sperrfluidsystems bzw. eines Sperrfluiddichtungssystems in dem Kraftstoffinjektor mit einem Sperrfluid vorgesehen, d.h. um eine oder eine Anzahl von Sperrfluiddichtungen (entsprechend Bedarfspositionen) an wenigstens einem brenngasbehaftet geführten Element des Kraftstoffinjektors zu bilden. Eine Sperrfluiddichtung ist hierbei insbesondere eine Dichtung, welche mittels eines druckbeaufschlagten Hydraulikfluids (Sperröl) gebildet ist, vorzugsweise weiterhin mittels einer Sperrfluiddichtkammer. Mit einer derart gebildeten Sperrfluiddichtung, welche das brenngasbehaftet geführte Element hierbei insbesondere umgibt, kann wirksam verhindert werden, dass Brenngas entlang der Führung des Elements, insbesondere einer Spaltführung, in einen Steuerfluidteil des Kraftstoffinjektors überströmen kann. Vorzugsweise ist eine solche Sperrfluiddichtung am Kraftstoffinjektor entlang einer Führung eines jeweiligen Brenngas-Düsenventilglieds gebildet, das heißt um den Übertritt von Brenngas aus dem düsennahen Brenngas-Düsenraum entlang der Führung in den düsenfernen Steuerfluid-Steuerkreis zu verhindern. Der dritte Fluidversorgungsweg ist zum Beispiel zur Beaufschlagung mit einem Druckniveau etwas über jenem des Brenngasdrucks vorgesehen, zum Beispiel mit einem Druckniveau ca. 5 bis 10 % über jenem des Brenngasdrucks.

Die vorgeschlagene Kraftstoffinjektoranordnung weist weiterhin eine erste Schaltvorrichtung im zweiten Fluidversorgungsweg auf, welche über den Fluiddruck im dritten Fluidversorgungsweg gesteuert den zweiten Fluidversorgungsweg öffnet oder sperrt. Das Fluid im dritten Fluidversorgungsweg, i.e. insbesondere Sperrfluid, stellt hierbei insoweit ein Steuermedium für die erste Schaltvorrichtung dar (bzw. wirkt als solches), welche erste Schaltvorrichtung in Abhängigkeit des Sperrfluid-Druckniveaus (bzw. des somit auch an der ersten Schaltvorrichtung vorherrschenden Sperrfluiddruckniveaus) in Offen- oder Sperrstellung schaltet, mithin den zweiten Fluidversorgungsweg öffnet oder sperrt. Insbesondere wird die erste Schaltvorrichtung hierbei ausschließlich über den Sperrfluiddruck gesteuert.

Die Kraftstoffinjektoranordnung weist ferner eine zweite Schaltvorrichtung im ersten Fluidversorgungsweg auf, welche über den Fluiddruck im zweiten Fluidversorgungsweg stromab der ersten Schaltvorrichtung gesteuert den ersten Fluidversorgungsweg öffnet oder sperrt. Das Fluid im zweiten Fluidversorgungsweg, i.e. insbesondere Brenngas, dient insoweit als Steuermedium für die zweite Schaltvorrichtung, welche vorzugsweise gleichsam der ersten Schaltvorrichtung ausgestaltet sein kann, und welche weiterhin in Abhängigkeit des Brenngas-Druckniveaus stromab der ersten Schaltvorrichtung (im zweiten Fluidversorgungsweg) (und insoweit somit auch des an der zweiten Schaltvorrichtung vorherrschenden Brenngas-Druckniveaus) in Offen-oder Sperrstellung schaltet, mithin den ersten Fluidversorgungsweg öffnet oder sperrt. Hierbei wird auch die zweite Schaltvorrichtung insbesondere ausschließlich über den Brenngasdruck gesteuert (welcher stromab der ersten Schaltvorrichtung vorherrscht).

Zur (Fluid-)Drucksteuerung können die erste und/oder die zweite Schaltvorrichtung insbesondere derart konfiguriert sein, mit Überschreiten einer ersten Schaltschwelle in Offenstellung zu schalten, mithin den jeweiligen Fluidversorgungsweg zu öffnen, mit Unterschreiten der ersten Schaltschwelle in Sperrstellung zu schalten. Hierbei kann die erste Schaltschwelle zum Beispiel etwas unterhalb eines (Soll-)-Betriebsdruckniveaus des jeweiligen Steuermediums (Sperrfluid bzw. Brenngas) gewählt sein, so dass ein Sicherheitsabstand implementiert wird, welcher hilft, eine unbeabsichtigte Abschaltung (Sperren) der Schaltvorrichtung bei etwaigen Druckschwankungen zu vermeiden, im Rahmen derer der (Ist-)-Betriebsdruck des Steuermediums z.B. kurzzeitig unter das Sollniveau abfällt. Weiterhin wird hierbei auch eine zuverlässige Anschaltung (Öffnen) erzielt.

Denkbar ist daneben auch, eine oder beide Schaltvorrichtungen so auszugestalten, dass diese zwei Schaltschwellen aufweisen. Bei einer solchen Ausgestaltung kann vorgesehen sein, dass die erste Schaltschwelle für die Einnahme der Offenstellung über der zweiten Schaltschwelle für die Einnahme der Sperrstellung liegt. Hierbei können die Schaltschwellen zum Beispiel so gewählt sein, dass die erste Schaltschwelle mit einem (Soll-)Betriebsdruckniveau des jeweiligen Steuermediums korrespondiert und die zweite Schaltschwelle zum Beispiel mit einem Druckniveau unterhalb des vorgesehenen (Soll-)Steuermedium-Betriebsdruckniveaus. Hierdurch kann wiederum ein unbeabsichtigtes Abschalten bei Schwankungen des (Ist-)Betriebsdrucks in oben erwähnter Weise vermieden werden, daneben analog zu oben ein zuverlässiges Abschalten bei Unterschreitung eines Mindestdrucks, z.B. für ein Not-Aus.Weiterhin kann hierbei ein Öffnen bzw. Anschalten erst bei tatsächlich vorherschendem Betriebsdruck des Steuermediums gewährleistet werden.

Bei der vorgeschlagenen Kraftstoffinjektoranordnung ist bevorzugt eine (erste, insbesondere das Steuermedium (Sperrfluid) führende) Steuerleitung seitens des dritten Fluidversorgungswegs an die erste Schaltvorrichtung zu deren Fluiddrucksteuerung geführt, insbesondere an einen hierfür bereitgestellten Steuereingang derselben. Diese Steuerleitung mündet vorzugsweise stromab eines Einlasses des dritten Fluidversorgungswegs an die erste Schaltvorrichtung ab. Daneben weist die Kraftstoffinjektoranordnung bevorzugt eine weitere (zweite; insbesondere das Steuermedium (Brenngas) führende) Steuerleitung auf, welche seitens des zweiten Fluidversorgungswegs an die zweite Schaltvorrichtung zu deren Fluiddrucksteuerung geführt ist, insbesondere wiederum an einen dazu bereitgestellten Steuereingang derselben. Diese Steuerleitung mündet insbesondere stromab der ersten Schaltvorrichtung aus dem zweiten Fluidversorgungsweg ab.

Bei der vorgeschlagenen Kraftstoffinjektoranordnung sind die erste und die zweite Schaltvorrichtung, weiterhin insbesondere auch oben erörterte Steuerleitungen, je vorzugsweise stromauf und weiterhin vorzugsweise fern jeweiliger Bedarfspositionen in den Fluidversorgungswegen angeordnet (Schaltvorrichtung) bzw. abzweigend (Steuerleitung). Somit kann wirksam vermieden werden, dass sich an den Bedarfpositionen einstellende etwaige (betriebsbedingte) Druckunterschiede auf die Schaltfunktionalität der Schaltvorrichtungen in unbeabsichtigter Weise auswirken. Eine jeweilige Schaltvorrichtung kann insoweit vorzugweise einlassseitig bzw. zur Einlassseite eines bzw. des (damit verwendeten) Kraftstoffinjektors hin orientiert angeordnet in einem jeweiligen Fluidversorgungsweg gebildet sein.

Mit der vorgeschlagenen Kraftstoffinjektoranordnung gelingt es, auf einfache Weise ein Zuschalten und Abschalten der unterschiedlichen Fluide zu bewerkstelligen, insbesondere bei einem Zuschalten weiterhin mit der vorgesehenen Reihenfolge Sperrfluid, Brenngas und sodann Steuerfluid. Bei einem Abschalten von Brenngas, zum Beispiel im Rahmen eines Not-Aus-Signals, wird weiterhin - insoweit selbsttätig - auch das über den ersten Fluidversorgungsweg versorgte Fluid, i.e. insbesondere Steuerfluid, abgeschaltet.

Die Kraftstoffinjektoranordnung ist insoweit vorzugsweise eingerichtet, nach anströmseitigen Anschalten des je betriebsdruckbehafteten Fluids an einem jeweiligen Fluidversorgungsweg, zunächst über die erste Schaltvorrichtung und den (Betriebs-)Fluiddruck im dritten Fluidversorgungsweg (Sperrfluidweg) den zweiten Fluidversorgungsweg (Brenngasweg) und sodann über die zweite Schaltvorrichtung und den im zweiten Fluidversorgungsweg stromab der ersten Schaltvorrichtung vorherschenden (Betriebs-)Fluiddruck den ersten Fluidversorgungsweg (Steuerfluidweg), insbesondere selbsttätig, zu öffnen. Insoweit kann mittels der Schaltvorrichtungen eine selbsttätige kaskadierende Fluid(an)schaltung an einen Kraftstoffinjektor realisiert werden, wobei insbesondere eine gleichzeitige Anschaltung der betriebsdruckbehafteten Fluide an der Anströmseite der Fluidversorgungswege ermöglicht ist. Der Steuerungsaufwand ist hierbei gegenüber vorbekannten Lösungen ersichtlich vorteilhaft minimiert, das beabsichtigte schnelle Aufschalten der Fluide zudem auch realisierbar.

Allgemein können Ausgestaltungen der Kraftstoffinjektoranordnung dahingehen, dass die erste und/oder die zweite Schaltvorrichtung (bevorzugt beide Schaltvorrichtungen) ein fluiddruckgesteuertes Ventil ist, zum Beispiel ein 2/2-Wege-Ventil, weiterhin insbesondere mit selbsttätiger Rückstellfunktion. Ein solches Ventil kann bei Erreichen eines vorbestimmten Steuerdruckniveaus (Schaltschwelle; an einem Steuereingang) fluiddruckgesteuert Öffnen, bei Unterschreiten des Steuerdruckniveaus zum Beispiel über eine Federlast im Ventil rückgestellt werden.

Besonders bevorzugt und vorteilhaft äußerst unaufwändig zu realisieren sind Ausgestaltungen der Kraftstoffinjektoranordnung, bei welchen die erste und/oder die zweite Schaltvorrichtung ein entsperrbares Rückschlagventil aufweist bzw. ist, insbesondere sowohl die erste als auch die zweite Schaltvorrichtung. Mit einer solchen Ausgestaltung der Schaltvorrichtung kann eine äußerst günstige und standardisierte Ventillösung mit der Kraftstoffinjektoranordnung, insbesondere einem Kraftstoffinjektor derselben, verwendet werden, welche miniaturisiert bereitstellbar problemlos in ein Kraftstoffinjektorgehäuse integrierfähig ist.

Ein entsperrbares Rückschlagventil ist vorzugsweise differenzdruckgesteuert und weist insbesondere einen (Fluid-)Steuereingang bzw. -anschluss auf, daneben insbesondere einen ersten und einen zweiten (Fluid-)Anschluss. In einer vorgesehenen Durchströmrichtung, z.B. vom ersten zum zweiten Anschluss hin orientiert, kann das entsperrbare Rückschlagventil einen freien Durchfluss ermöglichen bzw. durchströmt werden, in einer Sperrrichtung, z.B. vom zweiten zum ersten Anschluss hin orientiert, einen Durchfluss bzw. eine Durchströmung verhindern bzw. Sperren. Beachtlich ist mit einem entsperrbaren Rückschlagventil hierbei, dass dieses bei einer entsprechenden Druckbeaufschlagung des Steuereingangs auch in Sperrrichtung durchströmt und insoweit entsperrt werden kann (d.h. gemäß obiger Definition vom zweiten zum ersten Anschluss durchströmt werden kann).

Im Rahmen der vorliegenden Erfindung ist ein jeweiliges entsperrbares Rückschlagventil insbesondere derart in dem zugeordneten Fluidversorgungsweg angeordnet, dass dieses bei fluiddruckgesteuerter Entsperrung über den fluidisch angesteuerten Steuereingang in Sperrrichtung durchströmbar ist, wobei die Sperrrichtung weiterhin insbesondere mit der Richtung von der Anströmseite des Fluidversorgungswegs hin zu dessen Abströmseite korrespondiert, insoweit mit einer Betriebs-Strömungsrichtung des Fluidversorgungswegs.

Somit ist das entsperrbare Rückschlagventil in der Lage, ohne entsprechende Steuerdruckbeaufschlagung den Fluidversorgungsweg in dessen vorgesehener Betriebs-Strömungsrichtung zu sperren, mit entsprechender Steuerdruckbeaufschlagung hingegen zu öffnen, d.h. durch aktive Aufsteuerung. Hierfür kann ein Differenzdruckschwellwert geeignet gewählt sein (d.h. zwischen dem Steueranschluss und dem in Betriebs-Strömungsrichtung anströmseitigen Anschluss des entsperrbaren Rückschlagventils), bei welchem mit anliegenden Betriebsdruckniveaus am Steueranschluss und am Auslassanschluss die beabsichtigte Entsperrung zuverlässig erfolgt.

Unterschreitet die Druckdifferenz den Schwellwert zur Entsperrung, schaltet das Rückschlagventil bei dieser Einbaulage, in welcher eine Durchströmung entgegen der eigentlichen Ventil-Durchlassrichtung vorgesehen wird, auch zuverlässig in Sperrstellung und hält diese (bei noch anliegendem Quellendruck). Nach Abschaltung jeweiliger Fluidquellen kann ein etwaig erforderlicher Druckabbau mittels Durchströmung in Durchlassrichtung für z.B. eine Drucklosschaltung bzw. eine Außerbetriebsetzung erfolgen.

Im Rahmen der vorliegenden Erfindung ist die erste Schaltvorrichtung insbesondere über das Fluid im ersten Strömungsweg (insbesondere Steuerfluid) ansteuerbar und insoweit vorzugsweise hydraulisch betätigbar bzw. steuerbar. Daneben ist die zweite Schaltvorrichtung insbesondere über das Fluid im zweiten Fluidversorgungsweg (insbesondere Brenngas) ansteuerbar und insoweit vorzugsweise pneumatisch betätigbar bzw. ansteuerbar. Eine jeweilige Schaltvorrichtung kann mit der Erfindung in einem Kraftstoffinjektor der Kraftstoffinjektoranordnung oder außerhalb eines solchen angeordnet sein.

Im Rahmen der vorliegenden Erfindung kann auch eine Kraftstoffinjektoranordnung vorgesehen werden, insbesondere wie oben erörtert, welche wenigstens ein entsperrbares Rückschlagventil zum fluiddruckgesteuerten Öffnen und Sperren einer über das jeweilige entsperrbare Rückschlagventil geführten Fluidversorgungsleitung mittels Fluiddruckbeaufschlagung seitens einer weiteren Fluidversorgungsleitung aufweist, wobei das entsperrbare Rückschlagventil insbesondere in einem Kraftstoffinjektor der Kraftstoffinjektoranordnung aufgenommen ist. Gerade mit einem solch entsperrbaren Rückschlagventil können besonders vorteilhafte Ausgestaltungen der Kraftstoffinjektoranordnung realisiert werden.

Vorgeschlagen wird im Rahmen der vorliegenden Erfindung auch eine Brennkraftmaschine, welche wenigstens eine wie vorstehend erörterte Kraftstoffinjektoranordnung aufweist.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in verschiedener Kombination bei einer Variante der Erfindung verwirklicht sein.

Bevorzugte Ausführungsformen der Erfindung werden nachfolgend anhand der beigefügten Zeichnungen näher erläutert. Es zeigen:
- Fig. 1: exemplarisch und schematisch eine Kraftstoffinjektoranordnung gemäß einer möglichen Ausführungsform der Erfindung.
- Fig. 2: exemplarisch und schematisch Fluidleitungswege sowie Schaltvorrichtungen gemäß einer weiteren möglichen Ausführungsform einer Kraftstoffinjektoranordnung gemäß der Erfindung.

In der nachfolgenden Beschreibung und den Zeichnungen entsprechen gleichen Bezugszeichen Elemente gleicher oder vergleichbarer Funktion.

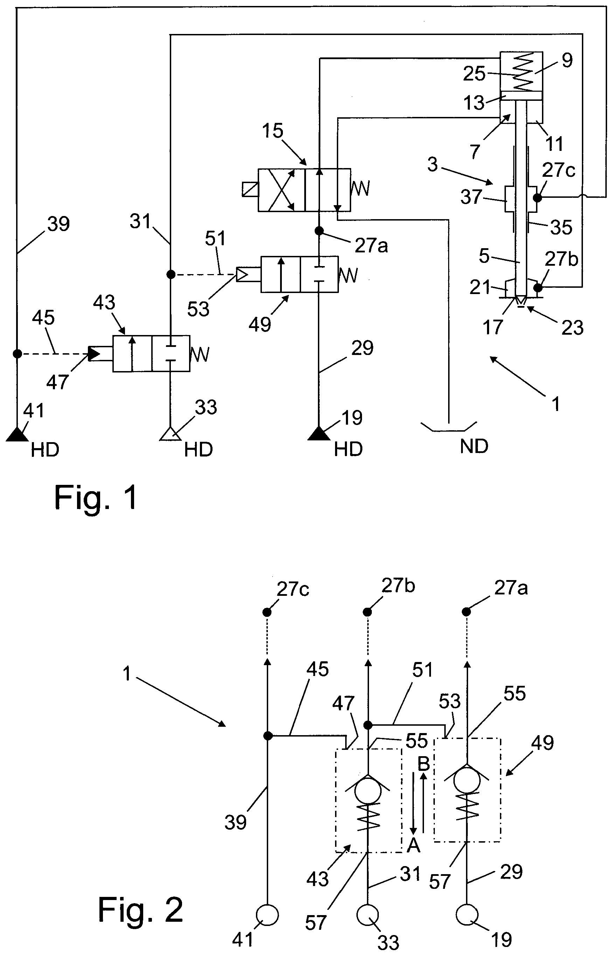

**Fig. 1** zeigt eine Kraftstoffinjektoranordnung 1, insbesondere mit einem Kraftstoffinjektor 3, welcher für das Ausdüsen von Brenngas bereitgestellt ist. Der Kraftstoffinjektor 3 umfasst wenigstens ein Brenngas-Düsenventilglied 5, daneben vorzugsweise auch ein Flüssigkraftstoff-Düsenventilglied (in Fig. 1 ist lediglich ein Brenngas-Düsenventilglied 5 exemplarisch dargestellt). Der Kraftstoffinjektor 3 ist insoweit bevorzugt ein Dual-Fuel-Kraftstoffinjektor, das heißt für das Ausdüsen von Brenngas und auch Flüssigkraftstoff eingerichtet.

Zur Steuerung des Brenngas-Düsenventilglieds 5 weist der Kraftstoffinjektor 3 eine Kolbensteueranordnung 7 auf, welche eine erste 9 und eine zweite 11 Steuerkammer umfasst, zwischen welchen ein mit dem Brenngas-Düsenventilglied 5 verbundener Kolben 13 der Kolbensteueranordnung 7 hydraulisch hin und her steuerbar ist, das heißt über entsprechende Druckbeaufschlagung und Entlastung der Steuerkammern 9, 11 mittels eines Steuerfluids. Zur bedarfsgerechten Zu- und Absteuerung von Steuerfluid an die Steuerkammern 9, 11 weist der Kraftstoffinjektor 3 weiterhin ein Steuerventil 15 (Pilotventil) auf, vorzugsweise in Form eines 4/2-Wege-Ventils.

Obwohl nicht explizit dargestellt, kann analog zu dem anhand von Fig. 1 erörterten Kraftstoffinjektor 3, welcher einen Steuerkreis mit der Kolbensteueranordnung 7 sowie dem damit verschalteten Steuerventil 15 aufweist, eine Ausgestaltung des Kraftstoffinjektors 3 bevorzugt auch dahingehen, dass der Steuerkreis eine Mehrzahl von Kolbensteueranordnungen 7 aufweist, über welche je ein Brenngas-Düsenventilglied 5 hubsteuerbar ist, wobei die Mehrzahl von Kolbensteueranordnungen 7 z.B. über ein einziges Steuerventil 15 des Steuerkreises angesteuert werden können. Ein solcher Kraftstoffinjektor 3 ist insbesondere als Mehrnadel-Brenngasinjektor ausgestaltet, wobei die mehreren Brenngas-Düsenventilglieder 5 (Nadeln) zum Beispiel um ein zentrales Flüssigkraftstoff-Düsenventilglied herum angeordnet sein können, weiterhin wiederum im Rahmen der Ausbildung des Kraftstoffinjektors 3 als Dual-Fuel-Kraftstoffinjektor.

Nunmehr insbesondere wieder mit Bezug auf Fig. 1 kann entsprechend des Wirkprinzips des Kraftstoffinjektors 3 das Brenngas-Düsenventilglied 5 aus einem Düsenventilsitz 17 gesteuert werden, falls die obere bzw. düsenferne Steuerkammer 9 entlastet ist (Abströmen von Steuerfluid über das Steuerventil 15 an eine Niederdruckseite ND) und die untere bzw. düsennahe Steuerkammer 11 hierbei belastet wird (Zuströmen von (hoch)druckbeaufschlagtem (HD) Steuerfluid von einer Steuerfluidquelle 19 über das Steuerventil 15), bei Umkehr der Druckverhältnisse an den Steuerkammern 9, 11 wieder in den Sitz 17 gesteuert werden. Mit Abheben aus dem Sitz 17 kann Brenngas aus einem Brenngas-Düsenraum 21 an eine nachgeordnete Brenngas-Düsenanordnung 23 gelangen und hierüber für einen Brenngas-Betrieb ausgedüst werden. In der düsenferneren Steuerkammer 9 kann eine Schließfeder 25 (Druckfeder) bereitgestellt sein, um eine Schließkraftunterstützung zu leisten.

Zur Versorgung des Steuerkreises, insbesondere über einen Einlass desselben, mit (hoch-) druckbeaufschlagtem Steuerfluid weist die Kraftstoffinjektoranordnung 1 einen ersten Fluidversorgungsweg 29 auf, das heißt insbesondere einen Steuerfluidweg 29. Dieser führt im Rahmen der vorgeschlagenen Kraftstoffinjektoranordnung 1 von einem quellenseitigen bzw. anströmseitigen Ende in den Kraftstoffinjektor 3 (hinein) und mündet in demselben bzw. innerhalb desselben abströmseitig aus, d.h. an einer Bedarfsposition 27a (welche vorliegend durch den Steuerkreis, insbesondere dessen Einlass gebildet ist). Im Rahmen eines Kraftstoffinjektorbetriebs kann zum Beispiel eine Steuerfluidquelle 19, vorzugsweise eine Steuerölquelle, an das anströmseitige Ende des Steuerfluidwegs 29 geschaltet sein.

Zur Versorgung von Brenngas an den Kraftstoffinjektor 3, insbesondere an dessen Brenngas-Düsenraum 21, weist die Kraftstoffinjektoranordnung 1 weiterhin einen zweiten Fluidversorgungsweg 31 auf, das heißt insbesondere einen Brenngasweg 31. Dieser führt im Rahmen der vorgeschlagenen Kraftstoffinjektoranordnung 1 wiederum von einem quellenseitigen bzw. anströmseitigen Ende in den Kraftstoffinjektor 3 und mündet in demselben bzw. innerhalb desselben auch wiederum abströmseitig aus, d.h. an einer Bedarfsposition 27b (welche hierbei am Brenngas-Düsenraum 21 gebildet ist). Im Rahmen der Kraftstoffinjektoranordnung kann der Brenngasweg 31 für den Brenngasbetrieb anströmseitig mit einer Brenngasquelle 33 verbunden sein, welche Brenngas zum Beispiel mit einem Druckniveau von 350 bar oder mehr bereitstellt.

Wie Fig. 1 weiterhin veranschaulicht, ist das Brenngas-Düsenventilglied 5 (bei einem Mehrnadel-Brenngasinjektor vorzugsweise sämtliche) in einer axialen Führung 35 geführt und hierbei - an einem längsmittleren Abschnitt - von einer Ringkammer 37 umgeben. Die Ringkammer 37 ist dazu vorgesehen, mittels in dieselbe eingebrachten, druckbeaufschlagten Sperrfluids wie etwa Sperröl, eine Sperrfluiddichtung um das Brenngas-Düsenventilglied 5 herum bilden zu können. Durch die Sperrfluiddichtung wird bei Brenngasbetrieb der Übertritt von Brenngas entlang der Führung 35 in den Steuerkreis vermieden.

Zur Versorgung des Sperrfluids an die eine oder mehrere Sperrfluiddichtungen im Kraftstoffinjektor 3, weist die Kraftstoffinjektoranordnung 1 weiterhin einen dritten Fluidversorgungsweg 39 auf, das heißt insbesondere einen Sperrfluidweg 39. Dieser führt im Rahmen der vorgeschlagenen Kraftstoffinjektoranordnung 1 wiederum von einem quellenseitigen bzw. anströmseitigen Ende in den Kraftstoffinjektor 3 und mündet in demselben bzw. innerhalb desselben auch wiederum abströmseitig aus, d.h. an einer Bedarfsposition 27c (welche hierbei durch die Sperrfluiddichtung gebildet ist oder z.B. durch einen Verzweigungspunkt, um eine Mehrzahl derselben anzubinden). Im Rahmen der Kraftstoffinjektoranordnung 1 kann der Sperrfluidweg 39 für den Brenngasbetrieb anströmseitig mit einer Sperrfluidquelle 41 verbunden sein, welche Sperrfluid vorzugsweise mit einem Druckniveau größer jenem des Brenngas-Druckniveaus bereitstellt, insbesondere um ca. 5% bis 10% höher, so dass der unbeabsichtigte Übertritt von Brenngas über die Sperrfluiddichtung vermieden ist.

Die derart ausgestaltete Kraftstoffinjektoranordnung 1 umfasst also eine Anzahl von Fluidversorgungswegen 29, 31, 39, nämlich den Steuerfluidweg 29, den Brenngasweg 31 und den Sperrfluidweg 39, welche - je an einer Abströmseite bzw. an den Bedarfspositionen 27a, b, c - in dem bzw. innerhalb des Kraftstoffinjektor(s) 3 der Kraftstoffinjektoranordnung 1 ausmünden.

Wie Fig. 1 hierbei weiter veranschaulicht, weist die Kraftstoffinjektoranordnung 1 ferner eine erste Schaltvorrichtung 43 im Brenngasweg 31 auf, welche über den Fluiddruck (insoweit Steuerdruck) im Sperrfluidweg 39 gesteuert den Brenngasweg 31 öffnet oder sperrt, insbesondere ausschließlich fluiddruckgesteuert und weiterhin insbesondere selbsttätig (als Steuermedium für die erste Schaltvorrichtung 43 dient also das Sperrfluid). Zur Bereitstellung dieser Funktionalität führt ein Abzweig des Sperrfluidwegs 39 bzw. eine (erste) Steuerleitung 45 an einen Steuereingang 47 der ersten Schaltvorrichtung 43, über welche Steuerleitung 45 der Steuereingang 47 der ersten Schaltvorrichtung 43 mit dem Fluiddruck (insoweit hydraulisch) seitens des Sperrfluidwegs 39 ansteuerbar ist.

Die Schaltvorrichtung 43, vorliegend als Ventil ausgeführt, weist hierbei vorzugsweise eine Schaltschwelle auf, welche etwas unterhalb des (Soll-)Betriebsdruckniveaus des Sperrfluids liegt, so dass mit anliegenden Sperrfluid-Betriebsdruck am Steuereingang 47 die Schaltschwelle überschritten wird und die Schaltvorrichtung 43 zuverlässig in Offenstellung schaltet (Brenngasweg 31 offen), mit Unterschreiten der Schaltschwelle (z.B. Druckabfall) in Sperrstellung schaltet (Brenngasweg 31 gesperrt). Bei dieser Ausgestaltung, wird ein unbeabsichtigtes Sperren des Brenngaswegs 31 für den Fall eines zu vernachlässigenden Druckabfalls des Sperrfluiddrucks unter das (Soll-) Betriebsdruckniveau vermieden, insbesondere im Rahmen von üblichen Druckschwankungen, solange die Schaltschwelle der ersten Schaltvorrichtung 43 nicht unterschritten ist.

Die erste Schaltvorrichtung 43 ist vorzugsweise zur Anströmseite des Brenngaswegs 43 hin orientiert im Brenngasweg 31 angeordnet, weiterhin zweigt auch die an die erste Schaltvorrichtung 43 geführte Steuerleitung 45 nahe der Anströmseite des Sperrfluidwegs 39 ab, insbesondere stromauf und vorzugsweise fern von dessen Bedarfsposition(en) 27c. Derart wird vermieden, dass sich abströmseitige Druckunterschiede an den Bedarfpositionen 27c negativ auf die Drucksteuerung der ersten Schaltvorrichtung 43 auswirken.

Wie Fig. 1 auch zeigt, weist die Kraftstoffinjektoranordnung 1 weiterhin eine (zweite) Schaltvorrichtung 49 auf, d.h. im Steuerfluidweg 29, welche über den Fluiddruck stromab der ersten Schaltvorrichtung 43 im Brenngasweg 31 gesteuert den Steuerfluidweg 29 öffnet oder sperrt (als Steuermedium für die zweite Schaltvorrichtung 49 dient also das Brenngas). Hierfür führt - in Analogie zur ersten Schaltvorrichtung 43 - ein Abzweig des Brenngaswegs 31 bzw. eine zweite Steuerleitung 51 an einen Steuereingang 53 der zweiten Schaltvorrichtung 49, über welche Steuerleitung 51 der Steuereingang 53 der zweiten Schaltvorrichtung 49 mit einem Fluiddruck (insoweit pneumatisch) seitens des Brenngaswegs 31 ansteuerbar ist. Die Steuerleitung 51 mündet stromab der ersten Schaltvorrichtung 43 aus dem Brenngasweg 31 ab (so dass diese an dem Brenngasweg 31 anliegenden Betriebsdruck erst sieht, falls die erste Schaltvorrichtung 43 bei anliegendem Betriebsdruck bereits in Offenstellung geschaltet ist).

Die zweite Schaltvorrichtung 49, vorliegend wiederum als Ventil ausgeführt, weist hierbei z.B. eine Schaltschwelle auf, welche etwas unterhalb des Betriebsdruckniveau des Brenngases liegt, so dass mit anliegenden Brenngas-Betriebsdruckniveau am Steuereingang die Schaltschwelle zuverlässig überschritten wird und die Schaltvorrichtung 49 in Offenstellung schaltet (Brenngasweg 31 offen), mit Unterschreiten der Schaltschwelle in Sperrstellung schaltet (Brenngasweg 31 gesperrt). Auch bei dieser Ausgestaltung der Schaltvorrichtung 49 wird wiederum ein unbeabsichtigtes Sperren des Steuerfluidwegs 29 für den Fall eines zu vernachlässigenden Druckabfalls des Brenngasdrucks unter das (Soll-) Betriebsdruckniveau vermieden, insbesondere im Rahmen von üblichen Druckschwankungen, solange die Schaltschwelle der zweiten Schaltvorrichtung 49 nicht unterschritten ist.

Mit dieser Ausgestaltung der Kraftstoffinjektoranordnung 1 gelingt es, sämtliche Fluidversorgungswege 29, 31, 39 gleichzeitig anströmseitig mit jeweiligem Betriebsdruck beaufschlagen zu können, wobei zunächst der Brenngasweg 31 über das Sperrfluid und nachfolgend der Steuerfluidweg 29 über das Brenngas bzw. das jeweilige dort vorherrschende (Betriebsdruck-) Niveau freigeschaltet wird. Insoweit kann mit vorteilhaft nur geringem baulichen Aufwand eine quasi selbsttätige Anschaltung der Fluide an den Kraftstoffinjektor 3 in insbesondere der vorgesehenen Reihenfolge Sperrfluid, Brenngas, Steuerfluid erzielt werden. Mit dieser Ausgestaltung gelingt es weiterhin, ein einfaches und nahezu verzugsloses Abschalten der Versorgung aller drei Fluide an den Kraftstoffinjektor 3 zu erzielen, wozu lediglich das Sperrfluid quellenseitig abgeschaltet zu werden braucht.

Bei dieser Ausgestaltung nach Fig. 1 ist eine jeweilige Schaltvorrichtung 43, 49 jeweils als Ventil ausgeführt, insbesondere als 2/2-Wege-Ventil. Zum Schalten des jeweiligen Ventils in die Öffnungsstellung ist dieses via den jeweiligen Steuereingang 47 bzw. 53 (Steuerseite) desselben fluiddruckgesteuert, das heißt über die jeweilige daran geführte Steuerleitung 45, 51, während eine Federlast des jeweiligen Ventils für eine selbsttätige Rückstellfunktion sorgt, das heißt mit Unterschreiten der Schaltschwelle. Mit Rückstellung wird insoweit der dem Ventil zugeordnete Fluidversorgungsweg 31 bzw. 29 gesperrt.

Anhand von Fig. 2 wird nunmehr eine bevorzugte Ausgestaltung der Kraftstoffinjektoranordnung 1 erörtert, bei welchen im Unterschied zu der vorstehend erörterten Ausführungsform die erste 43 und die zweite 49 Schaltvorrichtung je als entsperrbares Rückschlagventil gebildet sind. Fig. 2 legt entsprechend den Fokus hierauf.

Fig. 2 zeigt analog zu Fig. 1 die Fluidversorgungswege 29, 31, 39 der Kraftstoffinjektoranordnung 1, das heißt für Steuerfluid, Brenngas und Sperrfluid sowie exemplarisch daran anströmseitig angeordnete Quellen 19, 33, 41. Abströmseitig ist eine jeweilige Bedarfsposition 27a, b, c veranschaulicht.

Bei dieser Ausgestaltung der Kraftstoffinjektoranordnung 1, welche wenigstens ein entsperrbares Rückschlagventil 43, 49 zum fluiddruckgesteuerten Öffnen und Sperren einer über das jeweilige entsperrbare Rückschlagventil 43, 49 geführten Fluidversorgungsleitung 29, 31 mittels Fluiddruckbeaufschlagung seitens einer weiteren Fluidversorgungsleitung 39, 31 aufweist, ist die erste Schaltvorrichtung 43, welche als (erstes) entsperrbares Rückschlagventil gebildet und im Brenngas-Strömungsweg 31 angeordnet ist, über eine Steuerleitung 45, welche an einen Steuereingang 47 des entsperrbaren Rückschlagventils geführt ist, wie bei der Ausgestaltung nach Fig. 1 seitens des Sperrfluidwegs 39 druckbeaufschlagbar, das heißt mit dem im Sperrfluidweg 39 vorherrschenden Druckniveau. Die Ansteuerung des ersten entsperrbaren Rückschlagventils 43 an dessen Steuereingang 47 erfolgt vorliegend insoweit hydraulisch, als Steuermedium dient wiederum das Sperrfluid.

Analog hierzu ist die zweite Schaltvorrichtung 49, welche ebenfalls als entsperrbares (zweites) Rückschlagventil gebildet im Steuerfluidweg 29 angeordnet ist, wie bei der Ausgestaltung nach Fig. 1 über eine Steuerleitung 51 seitens des Brenngaswegs 31 ansteuerbar, welche Steuerleitung 51 stromab der ersten Schaltvorrichtung 43 vom Brenngasweg 31 abzweigt. Über die Steuerleitung 51 ist somit ein Steuereingang 53 des entsperrbaren Rückschlagventils 49 mit dem Druckniveau beaufschlagbar, welches im Brenngasweg 31 stromab des ersten entsperrbaren Rückschlagventils 43 vorherrscht. Die Ansteuerung des zweiten entsperrbaren Rückschlagventils 49 an dessen Steuereingang 53 erfolgt vorliegend insoweit pneumatisch, als Steuermedium dient wiederum das Brenngas.

Die ersten und zweiten entsperrbaren Rückschlagventile bzw. Schaltvorrichtungen 43, 49 weisen jeweils eine Durchlassrichtung (A), von einem ersten Anschluss 55 zu einem zweiten Anschluss 57 weisend auf, und eine Sperrrichtung (B), welche von dem zweiten Anschluss 57 zum ersten Anschluss 55 weist. Ersichtlich sind die entsperrbaren Rückschlagventile 43, 49 hierbei in dem jeweiligen Fluidversorgungsweg 31, 29 so angeordnet, dass eine Anströmung derselben seitens der jeweiligen Quelle 33 bzw. 41 die entsperrbaren Rückschlagventile 43, 49 in Sperrstellung drängt. Insoweit wird ein jeweiliges entsperrbares Rückschlagventil 43, 49 bei Betrieb der Kraftstoffinjektoranordnung 1 über den Fluidversorgungsweg 29, 31 in seiner Sperrrichtung B angeströmt, welche hierbei insoweit einer Betriebs-Strömungsrichtung des jeweiligen Fluidversorgungswegs 29, 31 entspricht.

Um ein jeweiliges, mit anliegender Quellenlast an sich in Sperrstellung gedrängtes, entsperrbares Rückschlagventil 43, 49 dennoch von der Anströmseite des Fluidversorgungswegs 29 bzw. 31 hin zur Abströmseite durchströmen zu können (d.h. in der Betriebs-Strömungsrichtung), ist die Kraftstoffinjektoranordnung 1 eingerichtet, ein solches je über den Steuereingang 47 bzw. 53 aktiv offensteuern bzw. entsperren zu können. Hierzu wird eine Druckdifferenz zwischen Steuerfluiddruck (am Steuereingang 47, 53) und Betriebsdruck ((Ventil-)Anströmseite (Anschluss 57)) seitens der Kraftstoffinjektoranordnung 1, z.B. mittels einer Drucksteuerung, geeignet eingestellt (Differenzdrucksteuerung). Mit Entsperrung ist sodann eine Durchströmung in der jeweiligen Sperrrichtung B ermöglicht.

Mit Vorteil macht sich die vorliegende Erfindung dies einfache Wirkprinzip hierbei zu Nutze, wobei die jeweiligen entsperrbaren Rückschlagventile 43, 49 vorteilhaft auch der beabsichtigten Funktionalität nachkommen, mit Abfall des Steuerdrucks unter einen Schwellwert (bei weiterhin anliegenden Betriebsdruck an der (Ventil-) Anströmseite (Anschluss 57)) ein selbsttätiges Schließen und Halten des Schließzustands zuverlässig zu gewährleisten.

Die entsperrbaren Rückschlagventile 43, 49 können auf vorteilhafte Weise miniaturisiert und standardisiert erhalten und verbaut werden, so dass sich ein vereinfachter und günstigerer Aufbau der Kraftstoffinjektoranordnung 1 erzielen lässt. Daneben ergeben sich mit einer solchen Kraftstoffinjektoranordnung 1 auch sämtliche Vorteile, wie diese oben für die Ausführungsform nach Fig. 1 erörtert wurden. Bevorzugt kann ein jeweiliges entsperrbares Rückschlagventil 43, 49 insbesondere in dem Kraftstoffinjektor 3 der Kraftstoffinjektoranordnung 1 angeordnet bzw. verbaut sein, alternativ z.B. auch außerhalb des Kraftstoffinjektors 3.

### BEZUGSZEICHENLISTE

- 1: Kraftstoffinjektoranordnung
- 3: Kraftstoffinjektor
- 5: Brenngas-Düsenventilglied
- 7: Kolbensteueranordnung
- 9: erste Steuerkammer
- 11: zweite Steuerkammer
- 13: Kolben
- 15: Steuerventil
- 17: Sitz
- 19: Steuerfluidquelle
- 21: Brenngas-Düsenraum
- 23: Brenngas-Düsenanordnung
- 25: Druckfeder
- 27a, b, c: Bedarfsposition
- 29: erster Fluidversorgungsweg (Steuerfluidweg)
- 31: zweiter Fluidversorgungsweg (Brenngasweg)
- 33: Brenngasquelle
- 35: Führung
- 37: Ringkammer (Sperrfluiddichtung)
- 39: dritter Fluidversorgungsweg (Sperrfluidweg)
- 41: Sperrfluidquelle
- 43: erste Schaltvorrichtung
- 45: Steuerleitung
- 47: Steuereingang
- 49: zweite Schaltvorrichtung
- 51: Steuerleitung
- 53: Steuereingang
- 55: Anschluss
- 57: Anschluss

- ND: Niederdruckseite
- HD: Hochdruck
- A: Durchlassrichtung
- B: Sperrrichtung

## Patentansprüche

1. Kraftstoffinjektoranordnung (1), aufweisend eine Anzahl von Fluidversorgungswegen (29, 31, 39), nämlich einen ersten (29), einen zweiten (31) und einen dritten Fluidversorgungsweg (39), wobei die Kraftstoffinjektoranordnung (1) eine erste Schaltvorrichtung (43) im zweiten Fluidversorgungsweg (31) aufweist, welche über den Fluiddruck im dritten Fluidversorgungsweg (39) gesteuert den zweiten Fluidversorgungsweg (31) öffnet oder sperrt, und wobei die Kraftstoffinjektoranordnung (1) eine zweite Schaltvorrichtung (49) im ersten Fluidversorgungsweg (29) aufweist, welche über den Fluiddruck stromab der ersten Schaltvorrichtung (43) im zweiten Fluidversorgungsweg (31) gesteuert den ersten Fluidversorgungsweg (29) öffnet oder sperrt.

2. Kraftstoffinjektoranordnung (1) nach Anspruch 1,
**dadurch gekennzeichnet, dass**
- der erste Fluidversorgungsweg (29) ein Steuerfluidweg ist, der zweite Fluidversorgungsweg (31) ein Brenngasweg ist und der dritte Fluidversorgungsweg (39) ein Sperrfluidweg ist.

3. Kraftstoffinjektoranordnung (1) nach einem der vorhergehenden Ansprüche,
**dadurch gekennzeichnet, dass**
- die Kraftstoffinjektoranordnung (1) eingerichtet ist, nach anströmseitigen Anschalten von jeweils Betriebsdruck an den Fluidversorgungswegen (29, 31, 39), zunächst über die erste Schaltvorrichtung (43) und den Fluiddruck im dritten Fluidversorgungsweg (39) den zweiten Fluidversorgungsweg (31) und sodann über die zweite Schaltvorrichtung (49) und den Fluiddruck im zweiten Fluidversorgungsweg (31) stromab der ersten Schaltvorrichtung (43) den ersten Fluidversorgungsweg (29) insbesondere selbsttätig zu öffnen.

4. Kraftstoffinjektoranordnung (1) nach einem der vorhergehenden Ansprüche,
**dadurch gekennzeichnet, dass**
- die erste (43) und/oder die zweite (49) Schaltvorrichtung ein fluiddruckgesteuertes Ventil ist, insbesondere ein 2/2-Wege-Ventil, weiterhin insbesondere mit selbsttätiger Rückstellfunktion.

5. Kraftstoffinj ektoranordnung (1) nach einem der vorhergehenden Ansprüche,
**dadurch gekennzeichnet, dass**
- die erste (43) und/oder die zweite (49) Schaltvorrichtung ein entsperrbares Rückschlagventil aufweist.

6. Kraftstoffinjektoranordnung (1) nach einem der vorhergehenden Ansprüche,
**dadurch gekennzeichnet, dass**
- bei der ersten (43) und/oder der zweiten Schaltvorrichtung ein Fluiddruck des die Schaltvorrichtung (43, 49) über den Fluiddruck steuernden Fluidversorgungswegs (31, 29) auf einen Steuereingang (47, 53) der Schaltvorrichtung (43, 49) wirkt.

7. Kraftstoffinjektoranordnung (1) nach einem der Ansprüche 5 und 6,
**dadurch gekennzeichnet, dass**
- bei einer als entsperrbares Rückschlagventil gebildeten Schaltvorrichtung (43, 49) dieses bei Entsperrung über einen Steuereingang (47, 53) in einer Sperrrichtung (B) durchströmbar in dem Fluidversorgungsweg (31, 29) angeordnet ist, wobei die Sperrrichtung (B) insbesondere einer Betriebs-Durchströmrichtung des Fluidversorgungswegs (31, 29) entspricht.

8. Kraftstoffinjektoranordnung (1) nach einem der vorhergehenden Ansprüche,
**dadurch gekennzeichnet, dass**
- der erste (29), zweite (31) und dritte (39) Fluidströmungsweg je an einer Abströmseite innerhalb eines Kraftstoffinjektors (3) bzw. in einem Kraftstoffinjektor (3) der Kraftstoffinjektoranordnung (1) ausmünden.

9. Kraftstoffinjektoranordnung (1) nach Anspruch 8,
**dadurch gekennzeichnet, dass**
- mittels der Schaltvorrichtungen (43, 49) eine selbstätige kaskadierende Fluidschaltung an den Kraftstoffinjektor (3) bewirkbar ist, insbesondere bei gleichzeitiger Anschaltung der betriebsdruckbehafteten Fluide an einer Anströmseite der Fluidversorgungswege (29, 31, 39).

10. Kraftstoffinjektoranordnung (1) nach einem der Ansprüche 8 und 9,
**dadurch gekennzeichnet, dass**
- wenigstens eine Schaltvorrichtung (43, 49) oder sämtliche im Kraftstoffinjektor (3) oder außerhalb desselben angeordnet sind.

11. Kraftstoffinjektoranordnung (1) nach einem der vorhergehenden Ansprüche,
**dadurch gekennzeichnet, dass**
- die erste Schaltvorrichtung (43) hydraulisch und/oder die zweite Schaltvorrichtung (49) pneumatisch betätigbar ist.

12. Brennkraftmaschine,
**gekennzeichnet durch**
- wenigstens eine Kraftstoffinjektoranordnung (1) nach einem der Ansprüche 1 bis 11.

## Claims

1. Fuel injector arrangement (1), having a number of fluid supply paths (29, 31, 39), specifically a first (29), a second (31) and a third fluid supply path (39), wherein the fuel injector arrangement (1) has a first switching device (43) in the second fluid supply path (31), which first switching device opens or blocks the second fluid supply path (31) in a manner controlled by means of the fluid pressure in the third fluid supply path (39), and wherein the fuel injector arrangement (1) has a second switching device (49) in the first fluid supply path (29), which second switching device opens or blocks the first fluid supply path (29) in a manner controlled by means of the fluid pressure downstream of the first switching device (43) in the second fluid supply path (31).

2. Fuel injector arrangement (1) according to Claim 1,
**characterized in that**
- the first fluid supply path (29) is a control fluid path, the second fluid supply path (31) is a combustion gas path, and the third fluid supply path (39) is a sealing fluid path.

3. Fuel injector arrangement (1) according to any of the preceding claims,
**characterized in that**
- the fuel injector arrangement (1) is configured to, after connection of respective operating pressure to the fluid supply paths (29, 31, 39) at an inflow side, firstly in particular automatically open the second fluid supply path (31) by means of the first switching device (43) and the fluid pressure in the third fluid supply path (39) and then in particular automatically open the first fluid supply path (29) by means of the second switching device (49) and the fluid pressure in the second fluid supply path (31) downstream of the first switching device (43).

4. Fuel injector arrangement (1) according to any of the preceding claims,
**characterized in that**
- the first (43) and/or the second (49) switching device is a fluid-pressure-controlled valve, in particular a 2/2 directional valve, furthermore in particular with automatic resetting function.

5. Fuel injector arrangement (1) according to any of the preceding claims,
**characterized in that**
- the first (43) and/or the second (49) switching device has an unblockable check valve.

6. Fuel injector arrangement (1) according to any of the preceding claims,
**characterized in that**,
- in the case of the first (43) and/or the second switching device, a fluid pressure of the fluid supply path (31, 29) which controls the switching device (43, 49) by means of the fluid pressure acts on a control inlet (47, 53) of the switching device (43, 49).

7. Fuel injector arrangement (1) according to either of Claims 5 and 6,
**characterized in that**,
- in the case of a switching device (43, 49) in the form of an unblockable check valve, this is, when unblocked via a control inlet (47, 53), arranged in the fluid supply path (31, 29) such that fluid can pass through in a blocking direction (B), wherein the blocking direction (B) in particular corresponds to an operational throughflow direction of the fluid supply path (31, 29).

8. Fuel injector arrangement (1) according to any of the preceding claims,
**characterized in that**
- the first (29), second (31) and third (39) fluid flow path open out in each case at an outflow side within a fuel injector (3) or in a fuel injector (3) of the fuel injector arrangement (1).

9. Fuel injector arrangement (1) as claimed in claim 8,
**characterized in that**,
- by means of the switching devices (43, 49), automatic cascaded fluid connection to the fuel injector (3) can be effected, in particular in the case of simultaneous connection of the fluids at operating pressure to an inflow side of the fluid supply paths (29, 31, 39).

10. Fuel injector arrangement (1) according to either of Claims 8 and 9,
**characterized in that**
- at least one switching device (43, 49) or all are arranged in the fuel injector (3) or outside the latter.

11. Fuel injector arrangement (1) according to any of the preceding claims,
**characterized in that**
- the first switching device (43) is hydraulically actuatable and/or the second switching device (49) is pneumatically actuatable.

12. Internal combustion engine,
**characterized by**
- at least one fuel injector arrangement (1) according to any of Claims 1 to 11.

## Revendications

1. Ensemble formant injecteur de carburant (1), comprenant un certain nombre de chemins d'alimentation en fluide (29, 31, 39), à savoir un premier (29), un deuxième (31) et un troisième chemin d'alimentation en fluide (39), l'ensemble formant injecteur de carburant (1) comportant dans le deuxième chemin d'alimentation en fluide (31) un premier dispositif de commutation (43) qui ouvre ou bloque le deuxième chemin d'alimentation en fluide (31) de manière commandée par la pression de fluide dans le troisième chemin d'alimentation en fluide (39), et l'ensemble d'injecteur de carburant (1) comportant dans le premier chemin d'alimentation en fluide (29) un deuxième dispositif de commutation (49) qui ouvre ou bloque le premier chemin d'alimentation en fluide (29) de manière commandée par la pression de fluide en aval du premier dispositif de commutation (43) dans le deuxième chemin d'alimentation en fluide (31).

2. Ensemble formant injecteur de carburant (1) selon la revendication 1,
**caractérisé en ce que**
- le premier chemin d'alimentation en fluide (29) est un chemin de fluide de commande, le deuxième chemin d'alimentation en fluide (31) est un chemin de gaz combustible et le troisième chemin d'alimentation en fluide (39) est un chemin de fluide barrière.

3. Ensemble formant injecteur de carburant (1) selon l'une des revendications précédentes,
**caractérisé en ce que**
- l'ensemble formant injecteur de carburant (1) est adapté pour ouvrir, notamment automatiquement, après mise en service côté amont de la pression de service respective au niveau des chemins d'alimentation en fluide (29, 31, 39), tout d'abord le deuxième chemin d'alimentation en fluide (31) par le biais du premier dispositif de commutation (43) et de la pression de fluide dans le troisième chemin d'alimentation en fluide (39) et le premier chemin d'alimentation en fluide (29) puis par le biais du deuxième dispositif de commutation (49) et de la pression de fluide dans le deuxième chemin d'alimentation en fluide (31) en aval du premier dispositif de commutation (43).

4. Ensemble formant injecteur de carburant (1) selon l'une des revendications précédentes,
**caractérisé en ce que**
- le premier (43) et/ou le deuxième (49) dispositif de commutation est une soupape commandée par pression de fluide, en particulier une soupape 2/2 voies, en outre en particulier ayant une fonction de réinitialisation automatique.

5. Ensemble formant injecteur de carburant (1) selon l'une des revendications précédentes,
**caractérisé en ce que**
- le premier (43) et/ou le deuxième (49) dispositif de commutation comporte une soupape anti-retour libérable.

6. Ensemble formant injecteur de carburant (1) selon l'une des revendications précédentes,
**caractérisé en ce que**
dans le premier (43) et/ou le deuxième dispositif de commutation, une pression de fluide du chemin d'alimentation en fluide (31, 29) commandant le dispositif de commutation (43, 49) par le biais de la pression de fluide agit sur une entrée de commande (47, 53) du dispositif de commutation (43, 49).

7. Ensemble formant injecteur de carburant (1) selon l'une des revendications 5 et 6,
**caractérisé en ce que**
- dans le cas d'un dispositif de commutation (43, 49) réalisé sous la forme d'une soupape anti-retour libérable, celui-ci est disposé dans le chemin d'alimentation en fluide (31, 29) de manière à pouvoir être traversé par un écoulement dans un sens de blocage (B) lorsqu'il est débloqué par le biais d'une entrée de commande (47, 53), le sens de blocage (B) correspondant notamment à un sens d'écoulement de service du chemin d'alimentation en fluide (31, 29).

8. Ensemble formant injecteur de carburant (1) selon l'une des revendications précédentes,
**caractérisé en ce que**
- les premier (29), deuxième (31) et troisième (39) chemins d'écoulement de fluide débouchent chacun sur un côté sortie situé à l'intérieur d'un injecteur de carburant (3) ou dans un injecteur de carburant (3) de l'ensemble formant injecteur de carburant (1).

9. Ensemble formant injecteur de carburant (1) selon la revendication 8,
**caractérisé en ce que**
- un circuit de fluide en cascade automatique peut agir sur l'injecteur de carburant (3) au moyen des dispositifs de commutation (43, 49), notamment lors d'une mise en circuit simultanée des fluides soumis à la pression de service du côté amont des chemins d'alimentation en fluide (29, 31, 39).

10. Ensemble d'injecteur de carburant (1) selon l'une des revendications 8 et 9,
**caractérisé en ce que**
- au moins un dispositif de commutation (43, 49) ou tous les dispositifs de commutation sont disposés dans l'injecteur de carburant (3) ou à l'extérieur de celui-ci.

11. Ensemble formant injecteur de carburant (1) selon l'une des revendications précédentes,
**caractérisé en ce que**
- le premier dispositif de commutation (43) peut être actionné hydrauliquement et/ou le deuxième dispositif de commutation (49) peut être actionné pneumatiquement.

12. Moteur à combustion interne, **caractérisé par**
- au moins un ensemble formant injecteur de carburant (1) selon l'une des revendications 1 à 11.
